# EUROPEAN PATENT APPLICATION

(11) **EP 4 338 942 A1**
(43) Date of publication of application: **20.03.2024**
(21) Application number: 23188357.0
(22) Date of filing: 28.07.2023
(51) Int. Cl.: B30B 3/04, B21B 29/00, H01M 4/04

(54) **ROLL PRESS MACHINE**

(30) Priority: 10.08.2022 JP 2022127641
(71) Applicant: Hitachi Power Solutions Co., Ltd., Hitachi-shi, Ibaraki 317-0073 (JP)
(72) Inventor: TSURUTA, Sadao, Hitachi-shi, Ibaraki 317-0073 (JP); TASAKI, Daisuke, Hitachi-shi, Ibaraki 317-0073 (JP); ITO, Shun, Hitachi-shi, Ibaraki 317-0073 (JP); TAKAHASHI, Masanori, Hitachi-shi, Ibaraki 317-0073 (JP); MITAMURA, Takahiro, Hitachi-shi, Ibaraki 317-0073 (JP)
(74) Representative: MERH-IP Matias Erny Reichl Hoffmann Patentanwälte PartG mbB

(57) **Abstract**

In order to solve the above problems, according to the present invention, a roll press machine includes a pair of upper and lower press rolls (2a,2b) each including an upper roll and a lower roll that are supported by a main bearing (1a1,1a2,1b1,1b2) at both ends and rotate at a predetermined speed, upper and lower bending bearings (3a1,3a2,3b1,3b2) that are disposed outside each of the main bearings and correct deflection of the press rolls by receiving a bending load, and an upper reverse operation bending mechanism provided in the upper roll that operates with hydraulic oil, and a lower reverse operation bending mechanism provided in the lower roll, two upper reverse operation bending mechanisms and two lower reverse operation bending mechanisms being installed in the upper and lower bending bearings, respectively. Deflection occurring in the upper roll and the lower roll is corrected in a manner that a bending load that moves upward the upper bending bearing disposed in the upper roll is applied by causing the upper reverse operation bending mechanism to generate downward power by hydraulic pressure of the hydraulic oil, and a bending load that moves downward the lower bending bearing disposed in the lower roll is applied by causing the lower reverse operation bending mechanism to generate upward power by the hydraulic pressure of the hydraulic oil.

## Description

### BACKGROUND OF THE INVENTION

### 1. Field of the Invention

The present invention relates to a roll press machine, and for example, relates to a roll press machine suitable for compressing-processing a thin film material such as an electrode material for a secondary battery such as a lithium ion battery.

### 2. Description of the Related Art

It is known that, when a thin film material such as an electrode material for a lithium ion secondary battery is subjected to compression processing by using a roll press machine, concave deflection occurs in a roll due to a reaction force received from a compression material.

In general, the electrode material for a lithium ion secondary battery is required to have an error in compression processing of about ± 1 to 2 µm, but the above-described concave deflection occurring in the roll affects the error in compression processing.

Thus, it is necessary to correct the above-described concave deflection occurring in the roll. For example, JP 5097863 B discloses a roll press machine including a bending mechanism that corrects the deflection of the roll by applying a load to the roll in a direction opposite to the deflection of the roll, which occurs due to a processing load of the material, with a bending bearing installed outside the main bearing.

The bending mechanism of the roll press machine disclosed in JP 5097863 B includes a cylinder unit and a piston inside the cylinder unit, and the piston is configured to be connected to a bending bearing by a piston rod. When hydraulic oil is supplied to the inside of the cylinder unit, the piston and the piston rod are operated, and thus the bending bearing moves. A load due to a bending load is applied to the roll, and, in this manner, the concave deflection is corrected.

### SUMMARY OF THE INVENTION

In the roll press machine disclosed in JP 5097863 B described above, the operating direction of the piston and the piston rod operated by the cylinder is the same as the direction in which the bending bearing moves. Conventionally, since the hydraulic oil is supplied from the piston rod side to the inside of the cylinder, the piston and the piston rod move to the head side of the piston.

Therefore, the cylinder accommodating the piston needs to secure a space for moving the piston to the piston head side. However, in a case where it is necessary to press a material with higher linear pressure than the conventional case, the deflection amount of the roll increases accordingly. Thus, in order to perform deflection correction, it is necessary to increase the bending load applied to the bending bearing.

However, in order to increase the bending load, it is necessary to increase the size of the cylinder. Thus, a problem that a machine housing in which the cylinder is disposed also increases in size, which leads to an increase in the cost of the entire machine occurs.

The present invention has been made in view of the above points, and an object of the present invention is to provide a roll press machine that does not increase in size and does not lead to an increase in cost even if the roll press machine includes a bending mechanism that corrects the deflection of a roll.

In order to achieve the above object, according to the present invention, there is provided a roll press machine that compression-processes a thin film material, the roll press machine including a pair of upper and lower press rolls each including an upper roll and a lower roll that are supported by a main bearing at both ends and rotate at a predetermined speed, upper and lower bending bearings that are disposed outside each of the main bearings and correct deflection of the press rolls by receiving a bending load, and an upper reverse operation bending mechanism provided in the upper roll that operates with hydraulic oil, and a lower reverse operation bending mechanism provided in the lower roll, two upper reverse operation bending mechanisms and two lower reverse operation bending mechanisms being installed in the upper and lower bending bearings, respectively. Deflection occurring in the upper roll and the lower roll is corrected in a manner that a bending load that moves upward the upper bending bearing disposed on the upper roll is applied by causing the upper reverse operation bending mechanism to generate downward power by hydraulic pressure of the hydraulic oil, and a bending load that moves downward the lower bending bearing disposed on the lower roll is applied by causing the lower reverse operation bending mechanism to generate upward power by the hydraulic pressure of the hydraulic oil.

According to the present invention, even if the bending mechanism that corrects the deflection of the roll is provided, the machine does not increase in size and does not lead to an increase in cost.

### BRIEF DESCRIPTION OF THE DRAWINGS

Fig. 1 is a front view showing an overall configuration of a roll press machine according to an embodiment of the present invention;
Fig. 2 is a right side view of Fig. 1 when viewed from an arrow direction (right direction);
Fig. 3 is a diagram illustrating a detailed configuration of a reverse operation bending mechanism used in the roll press machine in the embodiment of the present invention;
Fig. 4A is a diagram illustrating a first operating state of switching of a flowing direction of hydraulic oil by a switching valve in the reverse operation bending mechanism illustrated in Fig. 3;
Fig. 4B is a diagram illustrating a second operating state of switching of the flow direction of the hydraulic oil by the switching valve in the reverse operation bending mechanism illustrated in Fig. 3;
Fig. 5 is a diagram illustrating a pressure receiving area received by a piston from the hydraulic oil in the reverse operation bending mechanism illustrated in Fig. 3 in comparison with a pressure receiving area received by a conventional piston from the hydraulic oil;
Fig. 6 is a diagram illustrating a system of a hydraulic oil supply mechanism for operating the reverse operation bending mechanism illustrated in Fig. 3; and
Fig. 7 is a diagram for explaining setting of discharge pressure of a hydraulic oil supply device used in the system of the hydraulic oil supply mechanism illustrated in Fig. 6.

### DESCRIPTION OF THE PREFERRED EMBODIMENTS

Hereinafter, a roll press machine according to the present invention will be described based on the illustrated embodiment. In the drawings, the same reference numerals are used for the same components. Embodiment

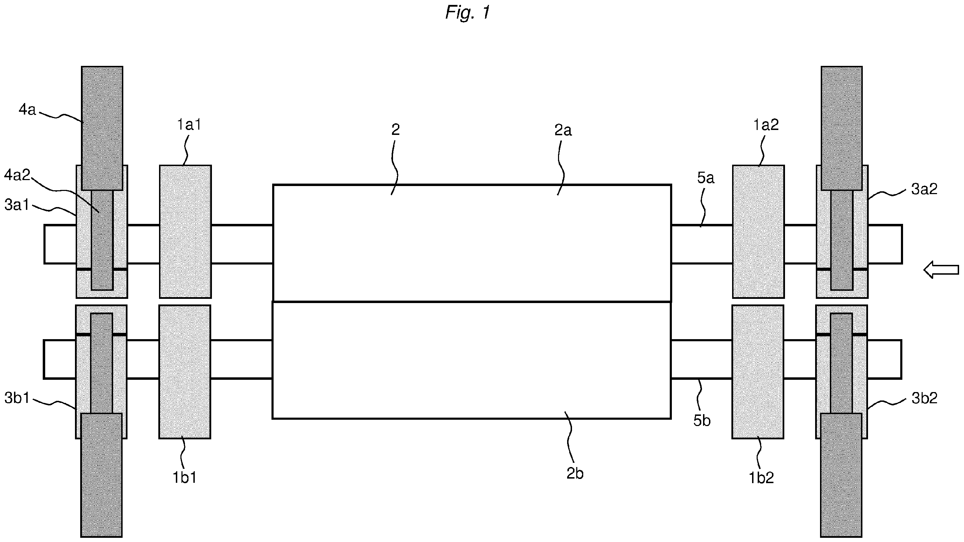

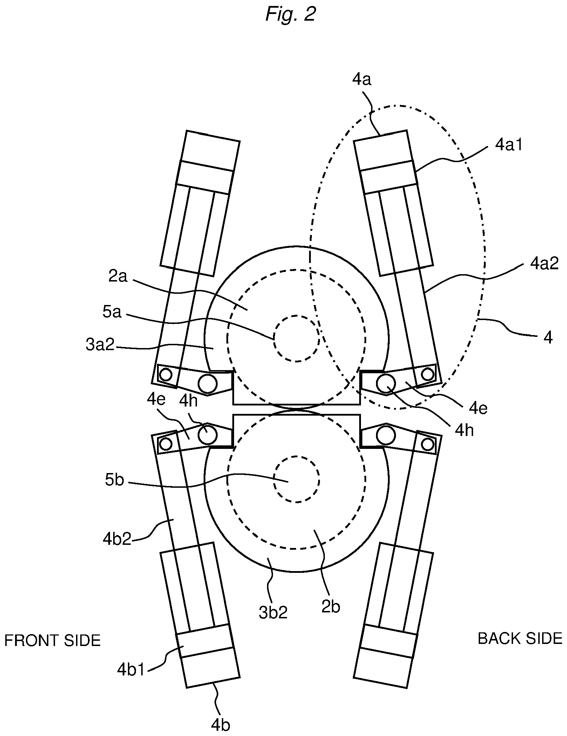

Fig. 1 is a front view illustrating an overall configuration of a roll press machine according to an embodiment of the present invention. Fig. 2 is a right side view of Fig. 1 when viewed from an arrow direction (right direction). The roll press machine according to the present embodiment illustrated in Figs. 1 and 2 is mainly used when a thin film material such as an electrode material of a secondary battery is subjected to compression processing.

As illustrated in Figs. 1 and 2, the roll press machine in the present embodiment is schematically configured to include a pair of upper and lower press rolls 2 including an upper roll 2a and a lower roll 2b that rotate at a predetermined speed and has both ends of which are supported by upper main bearings 1a1 and 1a2 and lower main bearings 1b1 and 1b2, upper bending bearings 3a1 and 3a2 and lower bending bearings 3b1 and 3b2 disposed outside the upper and lower main bearings 1a1 and 1a2 and the lower main bearings 1b1 and 1b2, respectively, and a reverse operation bending mechanism 4. Two reverse operation bending mechanisms are disposed on the upper bending bearings 3a1 and 3a2 and the lower bending bearings 3b1 and 3b2, respectively, and operate with hydraulic oil.

That is, four in total, that is, two upper bending bearings 3a1 and 3a2 and two lower bending bearings 3b1 and 3b2 are disposed on the left and right sides of the upper roll 2a and the left and right sides of the lower roll 2b. Eight in total, that is, two reverse operation bending mechanisms 4 are disposed on each of the upper bending bearings 3a1 and 3a2, and two reverse operation bending mechanisms 4 are disposed on each of the lower bending bearings 3b1 and 3b2.

In the roll press machine in the present embodiment, the reverse operation bending mechanism 4 generates downward power by hydraulic pressure to apply a bending load to the upper bending bearings 3a1 and 3a2 disposed on the upper roll 2a, thereby moving the upper bending bearings 3a1 and 3a2. The reverse operation bending mechanism 4 generates upward power by hydraulic pressure to apply a bending load to the lower bending bearings 3b1 and 3b2 disposed on the lower roll 2b, thereby moving the lower bending bearings 3b1 and 3b2 downward.

As a result, the deflection occurring in the upper roll 2a and the lower roll 2b is corrected to flatten the press roll 2.

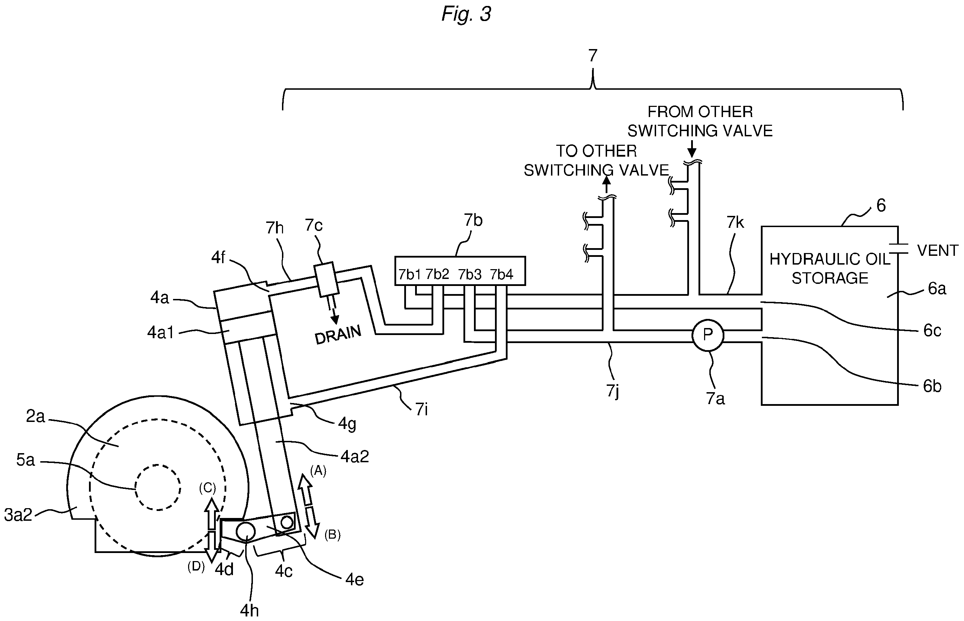

Fig. 3 is a diagram illustrating a detailed configuration of the reverse operation bending mechanism 4 used in the roll press machine in the embodiment illustrated in Fig. 2. One reverse operation bending mechanism on the upper side among the eight disposed reverse operation bending mechanisms 4 illustrated in Fig. 3 is illustrated as a representative.

As illustrated in Fig. 3, the reverse operation bending mechanism 4 in the present embodiment is configured to include an upper cylinder unit 4a to which hydraulic oil 6a stored in a hydraulic oil storage 6 is supplied so that the upper piston 4a1 and the upper piston rod 4a2 operates to generate power, a rotational support portion (fulcrum) 4h, and a link portion 4e that is supported by the rotational support portion 4h and includes a power receiving portion 4c and a power transmission portion 4d. The power receiving portion 4c has end portions on both right and left sides, which are connected to the upper piston rod 4a2 of the upper cylinder unit 4a. The power transmission portion 4d has end portions that abut on the upper bending bearing 3a2. The inside of the upper cylinder unit 4a is illustrated as a transmission view for convenience of description.

When the hydraulic oil 6a is supplied to the inside of the upper cylinder unit 4a, the upper piston 4a1 and the upper piston rod 4a2 are operated by the hydraulic pressure of the hydraulic oil 6a, whereby power is generated via the upper piston rod 4a2, the power receiving portion 4c receives the power with the rotational support portion 4h as the center, and the power transmission portion 4d is operated in a direction opposite to a direction (the direction of the arrow (A) or (B)) in which the upper piston rod 4a2 operates. Thus, a see-saw operation is performed.

Thus, the upper bending bearing 3a2 abutting on the power transmission portion 4d moves upward (direction of arrow (C)) or downward (direction of arrow (D)) to generate a bending load (reverse operation bending).

As a result, the power from the upper cylinder unit 4a is transmitted to an upper roll shaft 5a as the bending load of the upper bending bearing 3a2, and thus deflection occurring in the upper roll 2a is corrected. An end portion of the power transmission portion 4d may be connected to the upper bending bearing 3a2 in a coupled manner.

In addition, in order to smoothly transmit the power from the upper cylinder unit 4a to the upper bending bearing 3a2, it is desirable that the link portion 4e where the end portion of the power transmission portion 4d abuts on the upper bending bearings 3a1 and 3a2 is formed in an inverted V shape, and the link portion 4e where the end portion of the power transmission portion 4d abuts on the lower bending bearings 3b1 and 3b2 is formed in a V shape.

Next, a mechanism for operating the reverse operation bending mechanism 4 will be described in detail with reference to Fig. 3, by taking the reverse operation bending mechanism 4 disposed on the upper roll 2a as an example.

As illustrated in Fig. 3, the reverse operation bending mechanism 4 includes a hydraulic oil supply mechanism 7 that applies power to the upper cylinder unit 4a. The upper cylinder unit 4a includes a first opening portion 4f on a side surface of an upper end portion (head side: including a vicinity portion) of the upper cylinder unit 4a with the upper piston 4a1 as a boundary, and includes a second opening portion 4g on a side surface of a lower end portion (upper piston rod 4a2 side: including a vicinity portion) of the upper cylinder unit 4a.

The hydraulic oil supply mechanism 7 includes the hydraulic oil storage 6 that is a tank for storing the hydraulic oil 6a, a hydraulic oil supply device 7a that is a pump for supplying the hydraulic oil 6a from the hydraulic oil storage 6 to the upper cylinder unit 4a, a switching valve 7b that switches a flowing direction of the hydraulic oil 6a by electromagnetic drive, and a pressure reducing valve 7c that adjusts hydraulic pressure of the hydraulic oil 6a supplied to the upper cylinder unit 4a.

Further, the hydraulic oil supply mechanism 7 includes, as pipes connecting the respective components, a first hydraulic oil flow passage 7h that includes a pressure reducing valve 7c at an intermediate position and connects the first opening portion 4f and a second connection port 7b2 provided in the switching valve 7b, a second hydraulic oil flow passage 7i that connects the second opening portion 4g and a fourth connection port 7b4 provided in the switching valve 7b, a hydraulic oil supply passage 7j that includes the hydraulic oil supply device 7a at an intermediate position and connects the hydraulic oil supply port 6b provided in the hydraulic oil storage 6 and a third connection port 7b3 provided in the switching valve 7b, and a hydraulic oil collection passage 7k that connects a hydraulic oil collection port 6c provided in the hydraulic oil storage 6 and the first connection port 7b1 provided in the switching valve 7b.

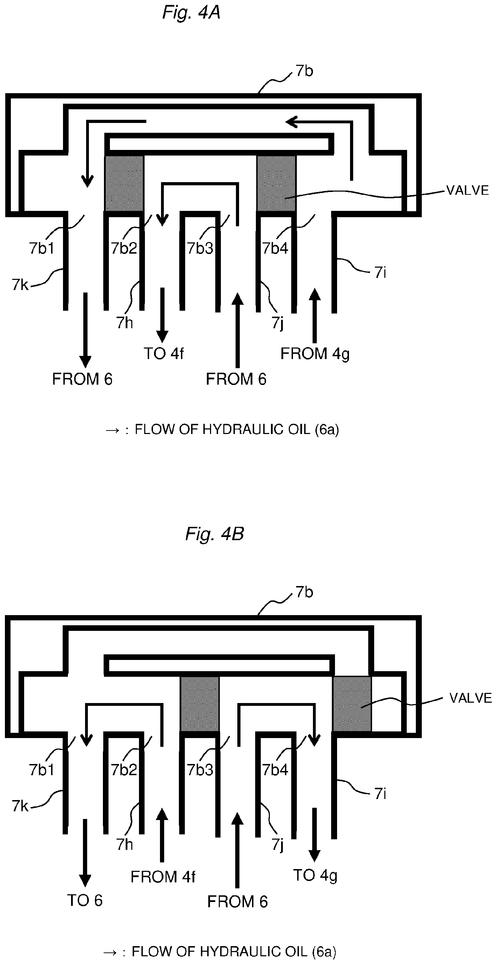

Next, switching of the flow direction of the hydraulic oil 6a by the switching valve 7b described above will be described in detail with reference to Figs. 4A and 4B. For convenience of description, the inside is illustrated as a transmission view, similarly to the upper cylinder unit 4a in Fig. 3.

The first hydraulic oil flow passage 7h, the second hydraulic oil flow passage 7i, the hydraulic oil supply passage 7j, and the hydraulic oil collection passage 7k are connected to the switching valve 7b that drives a valve by electromagnetic drive. In a first operating state (state of Fig. 4A) selected when the bending load is applied to the pair of upper and lower upper rolls 2a and 2b by the reverse operation bending mechanism 4, the switching valve 7b supplies the hydraulic oil 6a supplied from the hydraulic oil storage 6 from the first opening portion 4f to the inside of the upper cylinder unit 4a by causing the hydraulic oil supply passage 7j to communicate with the first hydraulic oil flow passage 7h and the first opening portion 4f.

On the other hand, when the second opening portion 4g of the upper cylinder unit 4a communicates with the second hydraulic oil flow passage 7i and the hydraulic oil collection passage 7k, the upper piston 4a1 is pushed downward to discharge the hydraulic oil 6a from the second opening portion 4g to the outside of the upper cylinder unit 4a, and the hydraulic oil 6a is collected in the hydraulic oil storage 6.

In a second operating state (state of Fig. 4B) selected when the bending load applied to the pair of upper and lower rolls 2a and 2b is released by the reverse operation bending mechanism 4, the switching valve 7b supplies the hydraulic oil 6a supplied from the hydraulic oil storage 6 from the second opening portion 4g to the inside of the upper cylinder unit 4a by causing the hydraulic oil supply passage 7j to communicate with the second hydraulic oil flow passage 7i and the second opening portion 4g.

On the other hand, when the first opening portion 4f of the upper cylinder unit 4a communicates with the first hydraulic oil flow passage 7h and the hydraulic oil collection passage 7k, the upper piston 4a1 is pushed upward to discharge the hydraulic oil 6a from the first opening portion 4f to the outside of the upper cylinder unit 4a, and the hydraulic oil 6a is collected in the hydraulic oil storage 6.

When the deflection of the upper roll 2a and the lower roll 2b is corrected, the switching valve 7b is brought into the first operating state of Fig. 4A, so that the hydraulic oil 6a is supplied from the first opening portion 4f to the inside of the upper cylinder unit 4a, and the upper piston 4a1 is moved by the hydraulic pressure of the hydraulic oil 6a. At this time, the second hydraulic oil flow passage 7i turns into an open state, and the hydraulic oil 6a on the upper piston rod 4a2 side is discharged from the second opening portion 4g by the hydraulic pressure from the head side of the upper piston 4a1.

As a result, as illustrated in Fig. 3, deflection correction of the upper roll 2a is performed (deflection correction of the lower roll 2b is also performed in a similar manner) in a manner that the hydraulic pressure of the hydraulic oil 6a from the head side of the upper piston 4a1 causes the power receiving portion 4c connected to the upper piston rod 4a2 to generate downward power, and the link portion 4e performs the see-saw operation in the directions of the arrows (B) and (C) around the rotational support portion 4h, so that the power transmission portion 4d at the position facing the power receiving portion 4c transmits the power to the upper bending bearing 3a2 as the bending load.

When the bending load is released and the deflection correction of the upper roll 2a is ended, the switching valve 7b is brought into the second operating state of Fig. 4B, whereby the hydraulic oil 6a is supplied from the second opening portion 4g to the inside of the upper cylinder unit 4a, and the piston 4a1 is moved by the hydraulic pressure of the hydraulic oil 6a. At this time, the first hydraulic oil flow passage 7h turns into the open state, and the hydraulic oil 6a on the head side is discharged from the first opening portion 4f by the hydraulic pressure from the upper piston rod 4a2 side.

As a result, as illustrated in Fig. 3, the hydraulic pressure of the hydraulic oil 6a from the upper piston rod 4a2 side causes the power receiving portion 4c connected to the upper piston rod 4a2 to generate upward power, and the link portion 4e performs the see-saw operation in the directions of the arrows (A) and (D) around the rotational support portion 4h, so that the power transmission portion 4d at the position facing the power receiving portion 4c is lowered downward, and the operation of bringing the position of the upper bending bearing 3a2 back to the original position is performed.

It is desirable that the link portion 4e in the reverse operation bending mechanism 4 sets the disposition position of the rotational support portion 4h such that the length of the power receiving portion 4c is longer than the length of the power transmission portion 4d, and the ratio is set such that power transmission portion 4d: power receiving portion 4c = 1 : 1 or more.

In the conventional deflection correction of the upper roll 2a and the lower roll 2b, the direction of the power output from the upper cylinder unit 4a by the hydraulic pressure of the hydraulic oil 6a is the same as the direction of the bending load applied to the roll shaft 5a by the upper bending bearing 3a2. That is, since the upper piston rod 4a2 and the upper bending bearing 3a2 are directly connected, when bending correction is performed by pulling up the upper bending bearing 3a2 upward in the upper roll 2a, it is necessary to supply the hydraulic oil 6a to the upper piston rod 4a2 side inside the upper cylinder unit 4a and move the upper piston 4a1 upward.

Therefore, when it is necessary to perform pressing at higher linear pressure than in the related art, it is necessary to increase the bending load. As a result, it is necessary to increase the size of the upper cylinder unit 4a in the upward direction, and the machine main body in which the upper cylinder unit 4a is disposed also needs to be increased in size, which results in an increase in cost.

However, in the present embodiment, the link portion 4e is disposed between the upper piston rod 4a2 and the upper bending bearing 3a2, the hydraulic oil 6a is supplied to the head side of the upper piston 4a1 inside the upper cylinder unit 4a to move the upper piston 4a1 downward, and the direction in which the power of the upper cylinder unit 4a is output is set to be opposite to the direction in which the upper bending bearing 3a2 transmits the bending load to the upper roll shaft 5a (reverse operation bending). Thus, it is possible to effectively utilize the downward space on the upper piston rod 4a2 side of the upper piston 4a1 and to operate the upper piston rod 4a2 in the downward direction, so that it is not necessary to increase the size of the upper cylinder unit 4a in the upward direction.

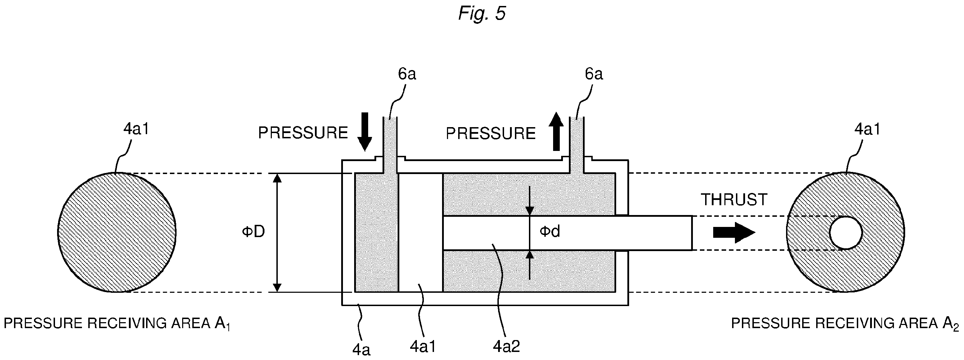

As illustrated in Fig. 5, since the hydraulic oil 6a is conventionally supplied to the upper piston rod 4a2 side of the upper piston 4a1, the pressure receiving area A₂ received by the upper piston 4a1 from the hydraulic oil 6a can be received only by the area (about 70%) excluding the portion corresponding to the cross-sectional area perpendicular to the longitudinal direction of the upper piston rod 4a2.

On the other hand, in the roll press machine in the present embodiment, by supplying the hydraulic oil 6a to the head side of the upper piston 4a1, it is possible to set the entire head-side surface (100%) of the upper piston 4a1 as the pressure receiving area A₁ from the hydraulic oil 6a. Therefore, when compared with the pressure of the same hydraulic oil 6a, the output generated by the upper cylinder unit 4a is large, and it is not necessary to increase the cylinder size.

For the above reasons, in the roll press machine in the present embodiment, it is not necessary to increase the size of the machine main body in which the upper cylinder unit 4a is disposed, and it is possible to suppress the cost of the entirety of the machine.

In the reverse operation bending mechanism 4 disposed on the lower roll 2b, the vertical positional relationship (for example, the first opening portion 4f is provided on the side surface of the lower end portion of the lower cylinder unit 4b, and the second opening portion 4g is provided on the side surface of the upper end portion thereof) of the constituent equipment, the transmission direction of the power and the bending load, the movement direction of the lower bending bearings 3b1 and 3b2, and the like are opposite to those of the upper roll 2a, but the other structures and operations are the same as those of the reverse operation bending mechanism 4 disposed on the upper roll 2a.

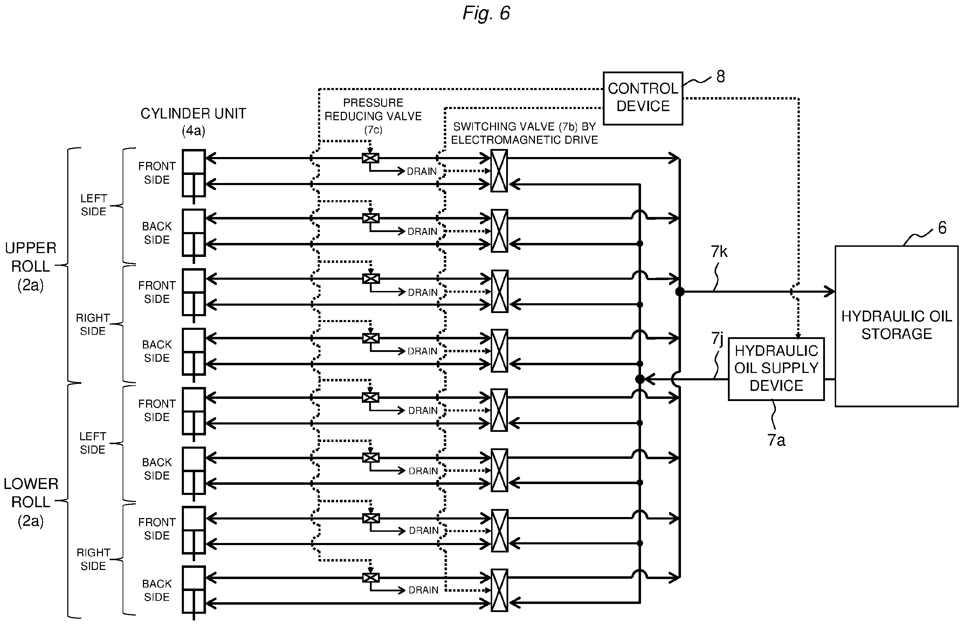

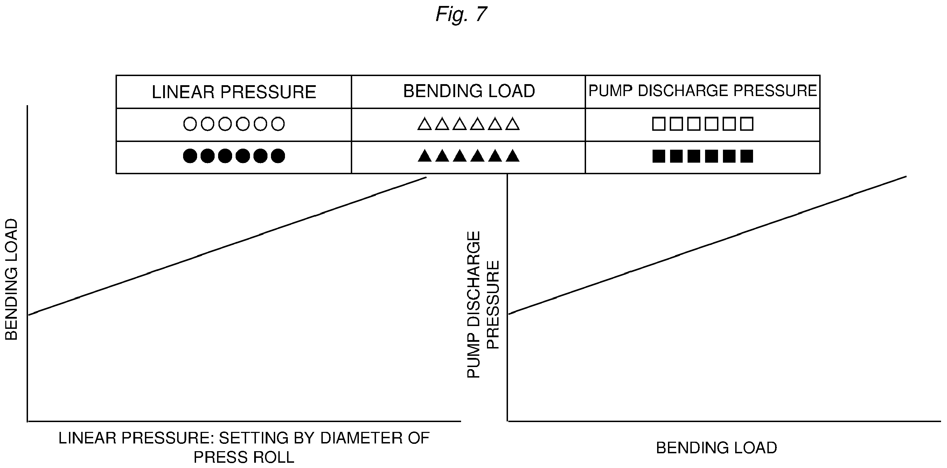

Next, Fig. 6 illustrates a system of the hydraulic oil supply mechanism 7 for operating the reverse operation bending mechanism 4, and Fig. 7 illustrates setting of the discharge pressure of the hydraulic oil supply device 7a used in the system of the hydraulic oil supply mechanism 7.

As illustrated in Fig. 6, the hydraulic oil storage 6 stores a predetermined amount of the hydraulic oil 6a, and supplies and collects the hydraulic oil 6a also to a mechanism that operates a main bearing (not illustrated) or the like, in addition to the hydraulic oil supply mechanism 7. As a result, since the storage level of the hydraulic oil 6a varies, a vent is provided at the upper portion to adjust the internal pressure.

The first hydraulic oil flow passage 7h and the second hydraulic oil flow passage 7i between the upper cylinder unit 4a and the switching valve 7b are connected to the first opening portion 4f and the second opening portion 4g of the upper cylinder unit 4a, respectively, and the direction in which the hydraulic oil 6a flows is switched by the switching valve 7b. When the hydraulic oil 6a is supplied from the first opening portion 4f or the second opening portion 4g to the inside of the upper cylinder unit 4a, the hydraulic oil 6a is supplied from the hydraulic oil storage 6 by driving a hydraulic oil supply device (pump) 7a having predetermined discharge pressure.

As illustrated in Fig. 7, the hydraulic oil supply device 7a sets the bending load in accordance with the linear pressure set by the diameter of the press roll 2 including the upper roll 2a and the lower roll 2b, sets the discharge pressure of the hydraulic oil supply device 7a in accordance with the bending load, and sets the supply amount per unit time of the hydraulic oil 6a supplied to the upper and lower cylinder units corresponding to the upper bending bearings 3a1 and 3a2 and the lower bending bearings 3b1 and 3b2 disposed on the upper roll 2a and the lower roll 2b.

In addition, the roll press machine in the present embodiment includes a control device 8 (see Fig. 6) that controls the switching valve 7b and the pressure reducing valve 7c. The control device 8 brings the switching valve 7b into the first operating state illustrated in Fig. 4A when processing by the roll press machine is started, and brings the switching valve 7b into the second operating state illustrated in Fig. 4B when the processing by the roll press machine is ended.

By bringing the switching valve 7b into the first operating state illustrated in Fig. 4A, the hydraulic oil 6a is supplied from the first opening portion 4f to the inside of the upper cylinder unit 4a via the first hydraulic oil flow passage 7h. At this time, the opening degree of the pressure reducing valve 7c is set in accordance with the condition of the bending load.

That is, since the hydraulic oil supply device 7a normally supplies the hydraulic oil 6a by continuously operating at constant discharge pressure (21 MPa), the hydraulic oil 6a is supplied to each switching valve 7b at the same supply amount after branching after supply. The supply pressure per unit time of the hydraulic oil 6a is individually adjusted by the opening degree of the pressure reducing valve 7c, in accordance with the deflection amounts of the end portion of the upper roll 2a and the end portion of the lower roll 2b to set the bending load.

As a result, it is possible to freely adjust bending forces of the upper bending bearings 3a1 and 3a2 and the lower bending bearings 3b1 and 3b2. The hydraulic oil 6a drained by the pressure reducing valve 7c is collected in the hydraulic oil storage 6.

As described above, in each reverse operation bending mechanism 4, the operation of the reverse operation bending mechanism 4 is realized in a manner that the hydraulic oil 6a is supplied from the hydraulic oil storage 6 by the hydraulic oil supply device 7a, and is supplied with switching the flow passage of the hydraulic oil 6a to the first opening portion 4f or the second opening portion 4g by the switching valve 7b, and the hydraulic oil 6a is circulated by the flow passage for collecting the hydraulic oil 6a from the second opening portion 4g or the first opening portion 4f and bringing the hydraulic oil 6a back to the hydraulic oil storage 6.

With such a roll press machine in the present embodiment, even if the roll press machine includes the bending mechanism that corrects the deflection of the upper roll 2a and the lower roll 2b, the machine does not increase in size and does not lead to an increase in cost.

The present invention is not limited to the above embodiment, and various modification examples may be provided. For example, the above embodiments are described in detail in order to explain the present invention in an easy-to-understand manner, and the above embodiments are not necessarily limited to a case including all the described configurations. Further, some components in one embodiment can be replaced with the components in another embodiment, and the configuration of another embodiment can be added to the configuration of one embodiment. Regarding some components in the embodiments, other components can be added, deleted, and replaced.

## Claims

1. A roll press machine that compression-processes a thin film material, the roll press machine comprising:
a pair of upper and lower press rolls each including an upper roll and a lower roll that are supported by a main bearing at both ends and rotate at a predetermined speed;
upper and lower bending bearings that are disposed outside each of the main bearings and correct deflection of the press rolls by receiving a bending load; and
an upper reverse operation bending mechanism provided in the upper roll that operates with hydraulic oil, and a lower reverse operation bending mechanism provided in the lower roll, two upper reverse operation bending mechanisms and two lower reverse operation bending mechanisms being installed in the upper and lower bending bearings, respectively,
the upper and lower reverse operation bending mechanisms include
upper and lower cylinder units including upper and lower pistons and upper and lower piston rods,
a rotational support portion, and
a link portion configured by a power receiving portion that is supported by the rotational support portion and having ends connected to the upper and lower piston rods of the upper and lower cylinder units on both left and right sides thereof, and a power transmission portion having ends abutting on the upper and lower bending bearings, and
the upper and lower pistons and the upper and lower piston rods are operated by the hydraulic pressure of the hydraulic oil to generate power, so that the power receiving unit and the power transmission unit are operated in a see-saw manner to move upward or downward the upper and lower bending bearings abutting on the power transmission unit, wherein
deflection occurring in the upper roll and the lower roll is corrected in a manner that a bending load that moves upward the upper bending bearing disposed on the upper roll is applied by causing the upper reverse operation bending mechanism to generate downward power by hydraulic pressure of the hydraulic oil, and a bending load that moves downward the lower bending bearing disposed on the lower roll is applied by causing the lower reverse operation bending mechanism to generate upward power by the hydraulic pressure of the hydraulic oil.

2. The roll press machine according to claim 1, wherein
the link portion in which an end portion of the power transmission portion abuts on the upper bending bearing is formed in an inverted V shape, and
the link portion in which the end portion of the power transmission portion abuts on the lower bending bearing is formed in a V shape.

3. The roll press machine according to claim 1 or 2, wherein
the upper cylinder unit includes
a first opening portion on a side surface of an upper end portion of the upper cylinder unit, and
a second opening portion on a side surface of a lower end portion of the upper cylinder unit,
the upper reverse operation bending mechanism includes a hydraulic oil supply mechanism to which the hydraulic oil is supplied through the first opening portion and the second opening portion,
the hydraulic oil supply mechanism includes
a hydraulic oil storage that stores the hydraulic oil,
a hydraulic oil supply device that supplies the hydraulic oil to the upper cylinder unit,
a switching valve that switches a flowing direction of the hydraulic oil by electromagnetic drive,
a pressure reducing valve that adjusts the hydraulic pressure of the hydraulic oil supplied to the upper cylinder unit,
a first hydraulic oil flow passage that includes the pressure reducing valve at an intermediate position and connects the first opening portion and a second connection port provided in the switching valve,
a second hydraulic oil flow passage that connects the second opening portion and a fourth connection port provided in the switching valve,
a hydraulic oil supply passage that includes the hydraulic oil supply device at an intermediate position and connects a hydraulic oil supply port provided in the hydraulic oil storage and a third connection port provided in the switching valve, and
a hydraulic oil collection passage that connects a hydraulic oil collection port provided in the hydraulic oil storage and a first connection port provided in the switching valve,
in a first operating state selected when the bending load is applied to the upper roll by the upper reverse operation bending mechanism, the switching valve supplies the hydraulic oil supplied from the hydraulic oil storage to an inside of the upper cylinder unit from the first opening portion by causing the hydraulic oil supply passage to communicate with the first hydraulic oil flow passage and the first opening portion, and
in a second operating state selected when the bending load of the upper roll is released by the upper reverse operation bending mechanism, the hydraulic oil supplied from the hydraulic oil storage is supplied from the second opening portion to the inside of the upper cylinder unit by causing the hydraulic oil supply passage to communicate with the second hydraulic oil flow passage and the second opening portion.

4. The roll press machine according to at least one of the preceding claims, wherein
the lower cylinder unit includes
a first opening portion on a side surface of a lower end portion of the lower cylinder unit, and
a second opening portion on a side surface of an upper end portion of the lower cylinder unit,
the lower reverse operation bending mechanism includes a hydraulic oil supply mechanism to which the hydraulic oil is supplied through the first opening portion and the second opening portion,
the hydraulic oil supply mechanism includes
a hydraulic oil storage that stores the hydraulic oil,
a hydraulic oil supply device that supplies the hydraulic oil to the lower cylinder unit,
a switching valve that switches a flowing direction of the hydraulic oil by electromagnetic drive, and
a pressure reducing valve that adjusts the hydraulic pressure of the hydraulic oil supplied to the lower cylinder unit,
a first hydraulic oil flow passage that includes the pressure reducing valve at an intermediate position and connects the first opening portion and a second connection port provided in the switching valve,
a second hydraulic oil flow passage that connects the second opening portion and a fourth connection port provided in the switching valve,
a hydraulic oil supply passage that includes the hydraulic oil supply device at an intermediate position and connects a hydraulic oil supply port provided in the hydraulic oil storage and a third connection port provided in the switching valve, and
a hydraulic oil collection passage that connects a hydraulic oil collection port provided in the hydraulic oil storage and a first connection port provided in the switching valve,
in a first operating state selected when the bending load is applied to the lower roll by the lower reverse operation bending mechanism, the switching valve supplies the hydraulic oil supplied from the hydraulic oil storage to an inside of the lower cylinder unit from the first opening portion by causing the hydraulic oil supply passage to communicate with the first hydraulic oil flow passage and the first opening portion, and
in a second operating state selected when the bending load of the lower roll is released by the lower reverse operation bending mechanism, the hydraulic oil supplied from the hydraulic oil storage is supplied from the second opening portion to the inside of the lower cylinder unit by causing the hydraulic oil supply passage to communicate with the second hydraulic oil flow passage and the second opening portion.

5. The roll press machine according to claim 3 or 4, wherein
in the first operating state, when the upper and lower pistons are pushed downward or upward by causing the second opening portions of the upper and lower cylinder units to communicate with the second hydraulic oil flow passage and the hydraulic oil collection passage, the hydraulic oil is discharged from the second opening portions to an outside of the upper and lower cylinder units, and the hydraulic oil is collected in the hydraulic oil storage, and
in the second operating state, when the upper and lower pistons are pushed downward or upward by causing the first opening portions of the upper and lower cylinder units to communicate with the first hydraulic oil flow passage and the hydraulic oil collection passage, the hydraulic oil is discharged from the first opening portions to the outside of the upper and lower cylinder units, and the hydraulic oil is collected in the hydraulic oil storage.

6. The roll press machine according to claim 5, wherein
when the switching valve is brought into the first operating state, the power is generated so that the link portion performs a see-saw operation and transmits the power as the bending load to the upper and lower bending bearings, and
when the switching valve is brought into the second operating state, the link portion performs the see-saw operation so that positions of the upper and lower bending bearings are brought back to original positions.

7. The roll press machine according to claim 6, wherein
when the deflection of the upper roll and the lower roll is corrected, the switching valve is brought into the first operating state to supply the hydraulic oil from the first opening portion to the inside of the upper and lower cylinder units, and the upper and lower pistons are moved by the hydraulic pressure of the hydraulic oil,
at this time, the deflection of the upper roll and the lower roll is corrected in a manner that upward or downward power is generated in the power receiving portion connected to the upper and lower piston rods by the hydraulic pressure of the hydraulic oil from head sides of the upper and lower pistons, the link portion performs a see-saw operation around the rotational support portion, and the power transmission portion transmits the power to the upper and lower bending bearings as the bending load,
when applying the bending load is released and deflection correction of the upper roll and the lower roll is ended, the switching valve is brought into the second operating state to supply the hydraulic oil from the second opening portion to the inside of the upper and lower cylinder units, and the upper and lower pistons are moved by the hydraulic pressure of the hydraulic oil, and
at this time, an operation of bringing the positions of the upper and lower bending bearings back to the original positions is performed in a manner that upward or downward power is generated in the power receiving portion connected to the upper and lower piston rods by the hydraulic pressure of the hydraulic oil from the upper and lower piston rod sides, the link portion performs the see-saw operation around the rotational support portion, and the power transmission portion is lowered downward or rises upward.

8. The roll press machine according to claim 3 or 4, wherein when the hydraulic oil is supplied from the first opening portion to the inside of the upper and lower cylinder units, the hydraulic oil is supplied from the hydraulic oil storage by driving the hydraulic oil supply device having predetermined discharge pressure.

9. The roll press machine according to claim 8, wherein the hydraulic oil supply device sets the bending load in accordance with linear pressure set by a diameter of the press roll, sets the discharge pressure of the hydraulic oil supply device in accordance with the bending load, and sets a supply amount per unit time of the hydraulic oil supplied to the upper and lower cylinder units corresponding to the upper and lower bending bearings arranged on the upper roll and the lower roll.

10. The roll press machine according to claim 3 or 4, further comprising:
a control device that controls the switching valve and the pressure reducing valve, wherein
the control device brings the switching valve into the first operating state when processing by the roll press machine is started, brings the switching valve into the second operating state when the processing by the roll press machine is ended, and sets an opening degree of the pressure reducing valve in accordance with a condition of the bending load in the first operating state.

11. The roll press machine according to claim 10, wherein the bending load is set by individually adjusting a supply amount per unit time of the hydraulic oil by an opening degree of the pressure reducing valve in accordance with a deflection amount of an end portion of the upper roll and an end portion of the lower roll.

12. The roll press machine according to claim 1, wherein the link portion sets a disposition position of the rotational support portion such that a length of the power receiving portion is equal to or longer than a length of the power transmission portion.
